# EUROPÄISCHE PATENTSCHRIFT

(11) **EP 1 284 270 B1**
(45) Veröffentlichungstag und Bekanntmachung des Hinweises auf die Patenterteilung: **29.06.2005**
(21) Anmeldenummer: 02016984.3
(22) Anmeldetag: 05.08.2002
(51) Int. Cl.: C07F 9/535, C08F 10/00, C08F 210/16, C08F 210/18

(54) **Vanadium-Imido-Phosphoraniminato-Komplexe für die Olefinpolymerisation**
Vanadium-Imido-Phosphoraniminato complexes for olefin polymerisation
Complexes Vanadium-Imido-Phosphoraniminato pour la polymérisation d'oléfines

(30) Priorität: 16.08.2001 DE 10140202
(43) Veröffentlichungstag der Anmeldung: 19.02.2003
(73) Patentinhaber: BAYER AG, 51368 Leverkusen (DE)
(72) Erfinder: Arndt-Rosenau, Michael, 41539 Dormagen (DE); Hoch, Martin, 52525 Heinsberg (DE); Sundermeyer, Jörg, 35041 Marburg (DE); Kipke, Jennifer, 68167 Mannheim (DE); Lemke, Martin, 35096 Niederweimer (DE)

(56) Entgegenhaltungen:
- EP-A- 0 518 415
- EP-A- 0 532 098
- WO-A-00/05237
- WO-A-94/14854

## Beschreibung

Die vorliegende Erfindung betrifft Vanadium-Imido-Phosphoraniminato-Verbindungen, sowie Zusammensetzungen enthaltend Vanadium-Imido-Phosphoraniminato-Verbindungen, welche sich insbesondere als Katalysatoren eignen für die Polymerisation von Olefinen, insbesondere die Ethen/Propen bzw. Ethen/α-Olefin Copolymerisation und die Terpolymerisation dieser Monomere mit Dienen.

Übergangsmetall-Imido-Komplexe, insbesondere Imido-Komplexe des Vanadiums sind aus der Literatur bekannt (A. Slawisch, Z. Anorg. Allg. Chem.374(3) (1970) 291-296; A. Slawisch et al. z: Naturforsch: B 25(3) (1970), 321; E.A. Maata Inorg. Chem. 23(17) (1984),2560-2561; F. Preuss et al. Z. Naturforsch., B: Anorg. Chem.,Org.Chem. 41B(2) (1986), 185-190; D. Devore et al. J. Am. Chem. Soc. 109 (1987), 7408-7416; F. Preuss et al. Z. Anorg. Allg. Chem. 609 (1992), 45-50; A. Hills et al. J. Chem. Soc., Dalton Ttrans. 1993, 3609-3617; J.-K. F. Buijink J. Organomet. Chem. 497(1-2) (1995),161-170; M.P. Coles et al. J. Organomet. Chem. 591(1-2) (1999),78-87; K.R. Birdswell et al. J. Organomet. Chem. 584(1) (1999), 200-205; F. Preuss et al. Z. Anorg. Allg. Chem. 625 (1999), 901-909; F. Preuss et al. Z. Naturforsch., B: Chem. Sci. 55(1) (2000), 1-4; F. Preuss et al. Z. Naturforsch., B: Chem. Sci. 56(3) (2001), 255-262).

EP-A2- 0 518 415 beschreibt Vanadium-Imidoaryl-Komplexe R-N=VX₃, wobei X ein einfach gebundener Ligand ist, und deren Verwendung für die Herstellung von EPDM, wobei ein im Vergleich zu Katalysatoren auf Basis von VOCl₃ verbesserter Einbau von Dien erzielt wird. Diese Katalysatoren weisen jedoch im Vergleich zu VOCl₃ deutlich niedrigere Aktivitäten auf

EP-A1- 0 532 098 beschreibt Vanadium-Imidoaryl-Komplexe, die in den ortho-Positionen der Aryl-Gruppe substituiert sind und deren Verwendung als Katalysatoren für die Polymerisation von Olefinen bei niedrigen Al/V-Verhältnissen. Bei hohen Al/V-Verhältnissen werden im Vergleich zu Katalysatoren auf Basis von VOCl₃ identische Produkte mit leicht abgesenkten Katalysatoraktivitäten erhalten.

WO-94/14854-A1 beschreibt Vanadium-Imidoaryl-Amide als Katalysatoren mit hoher Aktivität für die EPDM-Herstellung, wobei wiederum vorzugsweise eine Dialkyl-substituierte Aryl-Gruppe im Imid verwendet wird.

Im Gegensatz zu sigma gebundenen Liganden, wie sie in den oben beschriebenen Verbindungen neben der Imidogruppe vorliegen, können Phosphoraniminato-Gruppen als multi Elektronendonoren wirken und so eine größere Elektronendichte auf das Zentralatom übertragen (A.W. Johnson et al. "Ylides and Imines of Phosphorous", J. Wiley&Sons (1993), K. Dehnicke et al. Coord. Chem. Rev. 182 (1999), 19-65).

Vanadyl-Phosphoraniminato-Komplexe wurden erstmals von R. Choukroun et al. (Trans. Met. Chem. 4 (1979), 249) beschrieben. Sie synthetisierten VOCl₂(NPPh₃), VOCI(NPPh₃)₂ und VCl₃(NPPh₃)₂. Roesky et al. (H.W. Roesky et al.; Z. Naturforsch. 44b (1989), 35; H.W. Roesky et al. Inorg. Chem. 32 (1993), 5102-5104) beschrieben die Synthese von VOCl₂(NPPh₂NSMe₂O) und VOF₂(NPPh₃).

Die Verwendung von Übergangsmetallkomplexen mit Phosphoraniminato-Liganden als Katalysatoren für die Olefinpolymerisation beschreibt WO 00/05237. Die Aktivierung mit einfachen Aluminumalkylen wird als "comparatively weak" und die Aktivierung durch Aluminoxan oder "ionische Aktivatoren", wie zum Beispiel Trityltetrakis(pentafluorophenyl)borat als deutlich besser beschrieben.

Es wurde überraschenderweise gefunden, dass neuartige Vanadium-Imido-Phosphoraniminato-Komplexe in Kombination mit einfachen Alumiunalkylen und Aluminiumalkylhalogeniden hochaktive Katalysatoren für die Olefinpolymerisation bilden. Die Aktivierung durch einfache Aluminiumalkyle ist wesentlich billiger als die durch Alumoxane oder ionische Aktivatoren. Kostengünstige hochaktive Katalysatoren ermöglichen die ökonomische Herstellung von Polymeren mit geringeren Katalysatorrückständen, so können aufwendige Wasch- und Reinigungsschritte vermieden werden.

Gegenstand der Erfindung sind daher Vanadium-Imido-Phosphoraniminato-Verbindungen.

Bevorzugte Vanadium-Imido-Phosphoraniminato-Verbindungen entsprechen der allgemeinen Formel

R-N=VCl₂(NPR1R2R3) (I)

oder

R-N=VXY(NPR¹R²R³) (II),

wobei
- R: für eine C₁-C₁₀ Alkylgruppe, C₆-C₁₄ Arylgruppe oder C₁-C₁₀ Heteroarylgruppe steht,
wobei
- X,Y: unabhängig voneinander verschiedene oder gleichartige monoanionische Liganden sind, die miteinander und/oder mit der R-Gruppe des Imids, bzw. dessen Substituenten und/oder mit den Resten R¹, R², R³ des Iminophosphorans verbunden sein können oder wobei X und/oder Y ebenfalls ein Iminophosphoran mit frei wählbaren Resten R⁴, R⁵, R⁶ und R⁷, R⁸, R⁹ ist,
wobei
- R¹, R², R³ und gegebenenfalls R⁴, R⁵, R⁶, R⁷, R⁸, R⁹: unabhängig voneinander verschiedene oder gleichartige C₁-C₁₀ Alkyl-, C₆-C₁₄ Aryl-, C₁-C₁₀-Alkoxygruppen sind, die miteinander und/oder mit der R-Gruppe des Imids, bzw. dessen Substituenten und/oder mit den Resten R¹, R², R³ des Iminophosphoran verbunden sein können oder aber eine oder mehrere Substituenten des Phosphors über Heteroatome Het wie zum Beispiel N, O, S an das Phosphor gebunden sind.

Die Bindung zwischen Phosphor und dem/den Heteroatom(en) kann einfach und/oder doppelt sein; im Fall einer Doppelbindung zwischen Phosphor und Heteroatom trägt das Phosphorzentrum (neben der Imidogruppe und der über das Heteroatom gebundenen Gruppe) nur noch einen weiteren, einfach gebundenen Substituenten. Das/die Heteroatome kann/können einen oder mehrere weitere Substituenten tragen, die unabhängig voneinander aus C₁-C₁₀ Alkyl-, C₆-C₁₄ Aryl-, C₁-C₁₀-Alkoxygruppen gewählt werden können. Beispiele für solche Verbindungen sind Imino-tris(dimethylamino)-phosphoran, Imino-bis(dimethylamino)-phenyl-phosphoran, Imino-(dimethylamino)-di(n-butyl)-phosphoran, Imino-tris(N-anilino)-phosphoran, Imino-tris(methoxy)-phosphoran, Imino-di(methoxy)-(n-butyl)-phosphoran, Imino-(amino)-di(phenyl)-phosphoran.

Unter C₆-C₁₄-Aryl werden sämtliche dem Fachmann bekannte ein- oder mehrkernige Arylreste mit 6 bis 14 C-Atomen verstanden, wie Phenyl, Naphthyl, Fluorenyl, darüber hinaus kann die Arylgruppe weitere Substituenten tragen. Als Substituenten kommen hierbei Wasserstoff, Halogen, Nitro, C₁-C₁₀-Alkoxy oder auch C₁-C₁₀-Alkyl, sowie C₆-C₁₄-Cycloalkyl oder -Aryl in Frage, wie Bromphenyl, Chlorphenyl, Toloyl und Nitrophenyl.

Unter C₁-C₁₀-Heteroaryl werden sämtliche dem Fachmann bekannten ein- oder mehrkernigen heterozyklischen Aromaten mit 1 bis 10 C-Atomen verstanden, wie Thiophenyl, Pyridyl, Furanyl-, Pyranyl-, Thiazolyl-, Pyrrolyl-, Oxazolyl-, Isoxazolyl-, Pyrazolyl-, Imidazolyl-, 1.2.3-Triazolyl-, 1.2.4-Triazolyl-, Benzofuranyl-, Thianaphthenyl-, Dibenzofuranyl-, Indolyl-, Benzimidazolyl-, Indazolyl-, Chinolyl- Isochinolyl-, darüber hinaus kann die Heteroarylgruppe weitere Substituenten tragen. Als Substituenten kommen hierbei Wasserstoff, Halogen, Nitro, C₁-C₁₀-Alkoxy oder auch C₁-C₁₀-Alkyl, C₁-C₁₀-Heteroaryl- sowie C₆-C₁₄-Cycloalkyl oder -Aryl in Frage, wie 2.4-Dimethylfuran-3-yl-, N-Methyl-2-Phenyl-Pyrrol-4-yl.

Unter C₁-C₁₀-Alkoxy- werden sämtliche dem Fachmann bekannte lineare oder verzweigte Alkoxyreste mit 1 bis 10 C-Atomen verstanden, wie Methoxy-, Ethoxy-, n-Propoxy-, i-Propoxy-, n-Butoxy-, i-Butoxy-, t-Butoxy-, n-Pentoxy-, i-Pentoxy-, neo-Pentoxy- und Hexoxy-, Heptoxy-, Oktoxy-, Nonoxy- und Decoxy-, die ihrerseits wiederum substituiert sein können.

Unter C₁-C₁₀-Alkyl werden sämtliche dem Fachmann bekannte lineare oder verzweigte Alkylreste mit 1 bis 10 C-Atomen verstanden, wie Methyl, Ethyl, n-Propyl, i-Propyl, n-Butyl, i-Butyl, t-Butyl, n-Pentyl, i-Pentyl, neo-Pentyl und Hexyl, Heptyl, Oktyl, Nonyl und Decyl, die ihrerseits wiederum substituiert sein können. Als Substituenten kommen hierbei Wasserstoff, Halogen, Nitro, Hydroxyl, oder auch C₁-C₁₀-Alkyl, sowie C₆-C₁₄-Cycloalkyl oder -Aryl in Frage, wie Benzoyl, Trimethylphenyl, Ethylphenyl, Chlormethyl, Chlorethyl und Nitromethyl.

Unter C₆-C₁₄- Cycloalkyl werden sämtliche dem Fachmann bekannte ein- oder mehrkernige Cycloalkylreste mit 6 bis 14 C-Atomen verstanden, wie Cyclohexyl, Cycloheptyl, Cyclooctyl und Cyclononyl oder auch teil- oder vollhydriertes Fluorenyl, die ihrerseits wiederum substituiert sein können. Als Substituenten kommen hierbei Wasserstoff, Halogen, Nitro, C₁-C₁₀-Alkoxy oder auch C₁-C₁₀-Alkyl, sowie C₆-C₁₂-Cycloalkyl oder -Aryl in Frage, wie Methylcyclohexyl, Chlorcyclohexyl und Nitrocyclohexyl.

Wie bereits gesagt können die monoanionischen Liganden auch in Form chelatisierender Liganden miteinander und/oder mit dem Imid verbunden sein.

Es ist selbstverständlich auch möglich weitere Neutralliganden, wie zum Beispiel Tetrahydrofuran, 1.2-Dimethoxyethan, Phosphine, Diphosphine, Imine, Diimine, in die Ligandenstruktur der Vanadium-Imido-Phosphoraniminato-Verbindung einzubringen. Diese Verbindungen mit Neutralliganden sind in der vorliegenden Erfindung ausdrücklich mit umfaßt. Auch diese Neutralliganden können mit den Substituenten der Imidgruppe und/oder des Phosphoraniminatogruppe und/oder den Gruppen X,Y verbunden sein.

Bevorzuge monoanionische Liganden sind Halogen-, C₁-C₁₀-Alkoxy-, C₆-C₁₄-Aryloxy- und Amido-Gruppen. Besonders bevorzugt sind Halogen und C₁-C₁₄-Aryloxy-Gruppen.

Bevorzugte Strukturen der erfindungsgemäßen Vanadium-Imido-Phosphoraniminato-Verbindungen sind:

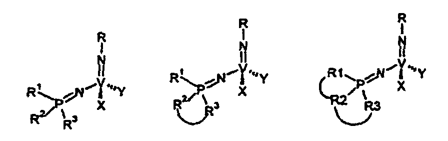

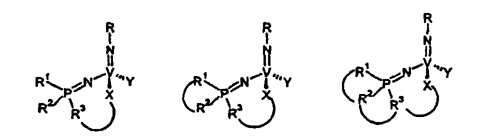

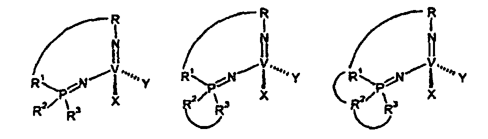

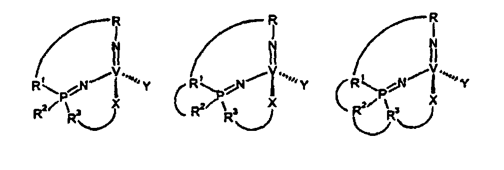

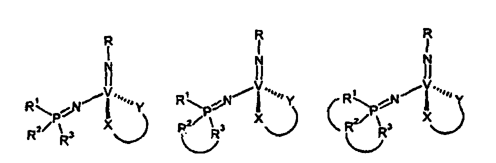

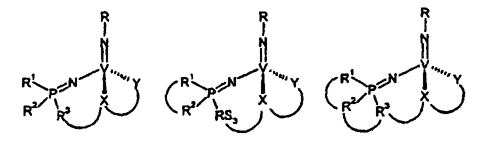

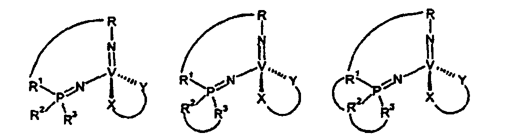

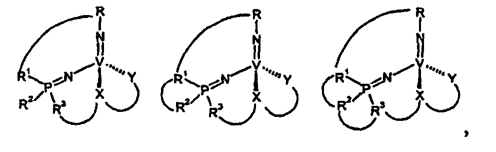

Ein weiterer Gegenstand der Erfindung sind Zusammensetzungen enthaltend Vanadium-Imido-Phosphoraniminato-Verbindungen und eine organo-metallische Verbindung der Gruppen 1, 2, 12 oder 13 des Periodensystems der Elemente gemäss IUPAC 1985, wobei mindestens eine Kohlenwasserstoffgruppe hierbei direkt über ein Kohlenstoffatom an das Metallatom gebunden ist.

Bevorzugte organo-metallische Verbindungen sind Verbindungen des Aluminiums, Natriums, Lithiums, Zink und Magnesiums. Besonders bevorzugt sind solche des Aluminiums.

Die Kohlenwasserstoffgruppe, die an das Metallatom gebunden ist vorzugsweise eine C₁-C₁₀-Alkylgruppe. Beispiele sind Amylnatrium, Butyllithium, Diethylzink, Butylmagnesiumchlorid, Dibutylmagnesium. Als Aluminiumverbindungen kommen insbesondere Trialkylalumiumverbindungen, Alkylaluminiumhydride, wie zum Beispiel Diisobutylalumiunhydrid, Alyklalkoxyalumiumverbindungen, Alkylaryloxyaluminiumverbindungen, Aluminoxane und halogenhaltige Aluminiumverbindungen, wie zum Beispiel Diethylaluminiumchlorid, Diisobutylaluminiunchlorid, Ethylaluminiumchlorid oder Ethylalumiuniumsequichlorid in Frage. Darüber hinaus können Mischungen dieser Komponenten eingesetzt werden.

Das Mol-Verhältnis zwischen organometallischer Verbindung und Vanadium kann in weiten Bereichen variiert werden. Im allgemeinen wird es im Bereich von 1 zu 1 bis 5000 zu 1 variieren. Bevorzugt ist der Bereich zwischen 1 zu 1 und 500 zu 1. Besonders bevorzugt der Bereich zwischen 2 zu 1 und 100 zu 1.

Die Zusammensetzung eignet sich als Katalysator. Diese Verwendung ist ein weiterer Gegenstand der Erfindung. Insbesondere eignet sich die Verbindung als Katalysator für die Polymerisation von Olefinen, insbesondere die Ethen/Propen bzw. Ethen/α-Olefin Copolymerisation und die Terpolymerisation dieser Monomere mit Dienen.

Der Katalysator kann durch dem Fachmann bekannte Zusätze modifiziert werden, welche die Produktivität des Katalysators steigern und/oder die Eigenschaften des erhaltenen Polymers verändern.

Als aktivitätssteigernde Zusätze werden bevorzugt halogenhaltige Verbindungen, insbesondere halogenhaltige Kohlenwasserstoffe eingesetzt. Besagte Kohlenwasserstoffe können weitere Heteroatome, wie Sauerstoff, Stickstoff, Phosphor und Schwefel enthalten. Besonders bevorzugt sind Verbindungen, die wenig Halogen (1 bis 2 Atome pro Molekül) enthalten, da so die Halogenkonzentration im Polymer niedrig gehalten werden kann. Ganz besonders bevorzugt sind Alkyl- und Alkoxyalkylester der Phenylmono- und Dichloressigsäure, sowie der Diphenylchloressigsäure.

Als aktivitätssteigernde Zusätze kommen darüber hinaus Lewis Säuren, wie zum Beispiel AlCl₃, BCl₃ oder SiCl₄ in Frage oder Lewis Basen, wie Ester, Amine, Ammoniak, Ketone, Alkohole, Ether.

Ausdrücklich werden auch Mischungen der genannten aktivitätssteigernden Zusätze genannt.

Es kann vorteilhaft sein, das erfindungsgemäße Katalysatorsystem auf einen Träger aufzubringen.

Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt gemäss DIN 66 131, das Porenvolumen durch die Zentrifugationsmethode nach McDaniel, *J. Colloid Interface Sci.* 1980, *78,* 31 und die Teilchengröße nach Cornillaut, *Appl. Opt.* 1972, *11*, 265.

Als geeignete anorganische Feststoffe seien beispielsweise genannt: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff(Ruße) und Band 24, S. 575 ff (Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-*co*-divinylbenzol, Polybutadien, Polyether, wie beispielsweise Polyethylenoxid, Polyoxytetramethylen oder Polysulfide, wie beispielsweise Poly-*p*-phenylensulfid. Besonders geeignete Materialien sind Polypropylen, Polystyrol oder Polystyrol-co-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff (Polypropylen), und Band 19, S. 265 ff (Polystyrol).

Die Herstellung des geträgerten Katalysatorsystems kann in einem weiten Temperaturbereich erfolgen. Im Allgemeinen liegt die Temperatur zwischen Schmelz- und Siedepunkt des inerten Lösungsmittelgemisches. Üblicherweise wird bei Temperaturen von -50 bis +200°C, bevorzugt -20 bis 100°C, besonders bevorzugt 20 bis 60°C, gearbeitet.

Die Erfindung betrifft weiterhin ein Verfahren zur Homo- oder Co-Polymerisation von Olefinen, bevorzugt Ethen, Propen, Isobuten, 1-Buten, 2-Buten, 1-Hexen, 1-Octen, 4-Methyl-1-Penten, ungesättigten alicyclischen Verbindungen wie zum Beispiel Cyclopenten, Norbornen, sowie ein Verfahren zur Co-Polymerisation dieser Monomere mit einem oder mehreren Dienen, bevorzugt Ethylidennorbornen, Vinylnorbomen, Dicyclopentadien, 1.4-Hexadien.

Die Polymerisation erfolgt bevorzugt indem man die α-Olefine mit dem erfindungsgemäßen Katalysatorsystem gelöst in geeigneten Lösungsmitteln, gasförmig, flüssig in feiner Verteilung oder suspendiert in flüssigem Verdünnungsmittel in Berührung bringt. Hierbei werden die Katalysatoren in der Regel in Mengen im Bereich von 10⁻¹⁰ bis 10⁻¹ mol% pro Mol Monomer eingesetzt.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Die nachfolgenden Beispiele sollen die vorliegende Erfindung sowie die Durchführung damit katalysierter Homo- und Copolymerisationsverfahren darstellen.

### Beispiele:

Alle aufgeführten Synthesen wurden in Argon-Atmosphäre durchgeführt.

Alle verwendeten Chemikalien sind, wenn nicht anders beschrieben, Handelsprodukte der Firmen Acros, Aldrich, Avocado, Fluka oder Merck-Schuchardt.

Dichlorphenylessigsäureethylester wurde nach Literaturvorschrift (EP 75 355, Seite 3, Example II) synthetisiert.

### Beispiel 1 (Vergleichsbeispiel):

### Synthese von (2,4,6-Cl₃Ph)-N=VCl₃

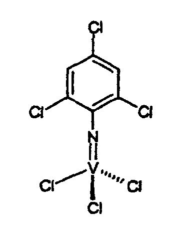

Zu 6.64 g (27.4 mmol) 2,4,6-Trichlorphenylsulfinylamin in 40 ml Toluol werden bei Raumtemperatur 3.65g (2 ml, 21.1 mmol) VOCl₃ in 20 ml Toluol getropft. Das Reaktionsgemisch färbt sich spontan dunkelgrün. Nach 30 min. Rühren werden flüchtige Bestandteile im Vakuum entfernt, der Rückstand dreimal mit je 20 ml Pentan digeriert und 24h bei -80°C aufbewahrt. Pentan-unlösliche Anteile werden abfiltriert und das Filtrat für die Gewinnung des Komplexes zur Trockene eingeengt.
Ausbeute 6.3g (85 %)
C: 20.79 (ber. 20.49); H: 0.57 (ber. 0.63); N: 4.02 (ber. 3.98)
¹H-NMR (200MHz, C₆D₆): 6.24 (s, 2H, Ar-Hₘₑₜₐ) ppm
¹³C-NMR (50MHz, C₆D₆): 128.3 (Ar-Cₘₑₜₐ), 135.9, 136.7 (Ar-Cₒᵣₜₕₒ+Cₚₐᵣₐ) ppm
⁵¹V-NMR (131 MHz, C₆D₆): 276.6 ppm
IR (Nujol): 1551vs, 1522m, 1512m, 1306m, 1206m, 1190m, 1153s, 1084m, 1063w, 972w, 876w, 858s, 839w, 820s, 806m, 729w, 721w, 710w, 696w, 669w, 611w, 575w, 529w, 484w, 453s cm⁻¹
EI-MS: m/z= 352 (M⁺, 12%), 196 (C₆H₂Cl₃N⁺, 100%), 158 (VCl₃⁺, 28%)

### Beispiel 2:

### Synthese von (2,4,6-Cl₃Ph)-N=VCl₂(N=PnBu₃)

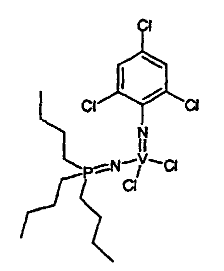

Zu einer Lösung von 1.00 g (2.84 mmol) (2,4,6-Cl₃Ph)-N=VCl₃ in 100 ml Toluol werden bei -50°C unter Rühren 0,82 g (2.84 mmol) N-Trimethylsilyl-tri(*n*.-butyl)-iminophosphoran (Synthese nach C.Birkhofer, S.M. Kiun, Chem. Ber. 97.2 (1964), 2100) zugegeben. Die Reaktionslösung färbt sich zunächst olivgrün. Nach 2 h wird das Reaktionsgemisch auf Raumtemperatur erwärmt und die nun braunrote Lösung anschließend unter Abdunkelung 60 min nachgerührt. Nach Entfernen des Lösungsmittels wird das ölige Rohprodukt in 2 mL Hexan aufgenommen und 48 h bei -80°C aufbewahrt. Der ausgefallene, blaue Feststoff wird abfiltriert und im Hochvakuum getrocknet.
- Ausbeute:: 1.13 g (74 %), mikkrokristalliner blau-violetter Feststoff

| C₁₈H₂₉Cl₅N₂PV (532.62) | | | |
|---|---|---|---|
| ber. | C 40.59 | H 5.49 | N 5.26 |
| gef. | C 41.20 | H 5.68 | N 5.47 |

¹H-NMR (300 MHz, CDCl₃): δ = 0.83 (t, 9 H, ³J_{HH} = 14.6 Hz, CH₂-CH₃), 1.24-1.32 (m, 4 H, CH₂-CH₂-CH₃), 1.84-1.88 (m, 2 H, P-CH₂-CH₂)
Ar-Hₘₑₜₐ) ppm.
¹³C-NMR (75 MHz, CDCl₃): δ = 13.7 (-CH₃ ), 24.5 ( CH₂-CH₂), 26.48 (d, P-CH₂-CH₂)
IR (Nujol): 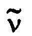 = 1763 w, 1643 w, 1556 w, 1282 m, 1140 s, 1103 s, 1072 s, 979 m, 912 m, 883 w, 866 w, 821 w, 800 cm⁻¹

### Beispiel 3:

### Synthese von (2, 6-iPr₂Ph)-N=VCl₃

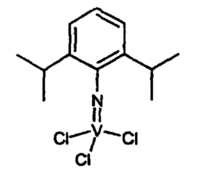

(2,6-iPr₂Ph)-N=VCl₃ wird gemäß Literaturvorschrift (D.D. Devore et al. J. Am. Chem. Soc. Vol. 109 (1987), 748-16) hergestellt.

### Synthese von (2, 6-iPr₂Ph)-N=VCl₂(N=PnBu₃)

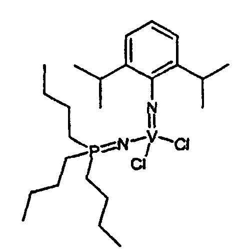

870 mg (3.00 mmol) N-Trimethylsilyl-tri(*tert*.-butyl)-iminophosphoran (Synthese nach C.Birkhofer, S.M. Kiun, Chem. Ber. 97.2 (1964), 2100) werden in 40 mL Toluol gelöst, auf -20°C gekühlt und mit einer Lösung von 1.00 g (3.00 mmol) [(2, 6-iPr₂Ph)-N=VCl₃] in 20 mL Toluol versetzt. Die Reaktionslösung färbt sich innerhalb 2 min rotbraun. Nach 30 min wird das Reaktionsgemisch auf Raumtemperatur erwärmt, weitere 5 min gerührt, über ausgeheiztes Celite filtriert und das Filtrat stark eingeengt. Das wachsartige Rohprodukt wird in 5 mL Pentan aufgenommen und 24 h bei -80°C aufbewahrt. Der ausgefallene Feststoff wird abfiltriert und im Hochvakuum getrocknet.
- Ausbeute:: 1.76 g (74 %), rotbrauner amorpher Feststoff
- Ausbeute:: 722 mg (85 %)
roter amorpher Feststoff

| C₂₄H₄₄Cl₂N₂PV (513.45) C₂₄H₄₄Cl₂N₂PV × C₇H₈ (605.59) | | | |
|---|---|---|---|
| ber. | C 56.14 | H 8.64 | N 5.46 |
| gef. | C 56.32 | H 8.48 | N 5.12 |

EI-MS: m/z = 513 (M⁺, 14 %), 216.3 (NPⁿBu₃, 72%).

### Beispiel 4 (Vergleichsbeispiel):

### Synthese von VOCl₂(N=PnBu₃)

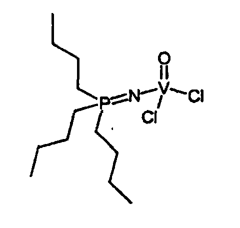

Zu einer Lösung von 0.98 g (5.68 mmol) VOCl₃ in 50 ml Toluol werden bei -30°C unter Rühren 1,64 g (5.68 mmol) N-Trimethylsilyl-tri(*n*.-butyl)-iminophosphoran (Synthese nach C.Birkhofer, S.M. Kiun, Chem. Ber. 97.2 (1964), 2100) zugegeben. Die Reaktionslösung färbt sich zunächst tiefrot. Nach 1 h wird das Reaktionsgemisch auf Raumtemperatur erwärmt und die nun gelbe Lösung 60 min nachgerührt. Nach Einengen des Lösungsmittels auf 10 ml wird mit 5 mL Hexan überschichtet und die Lösung 48 h bei -80°C aufbewahrt. Der ausgefallene, tiefgelbe Feststoff wird abfiltriert und im Hochvakuum getrocknet.
- Ausbeute:: 1.57 g (78 %), kristalline gelbe Nadeln

| C₁₂H₂₇Cl₂N₁PV (354.17) | | | |
|---|---|---|---|
| ber. | C 40.70 | H 7.68 | N 3.95 |
| gef. | C 40.82 | H 4.48 | N 7.84 |

¹H-NMR (300 MHz, CDCl₃): δ = 0.94 (t, 9 H, ³J_{HH} = 14.3 Hz, CH₂-CH₃), 1.41-1.61 (m, 4 H, CH₂-CH₂-CH₃), 2.16-2.30 (m, 2 H, P-CH₂-CH₂) ppm.
¹³C-NMR (75 MHz, CDCl₃): δ = 13.8 (-CH₃ ), 24.2 ( CH₂-CH₂), 25.38 (d, P-CH₂-CH₂)
³¹P-NMR (50 MHz), CDCl₃): δ = 49.2-53.3 (V-P-Kopplung)
IR (Nujol): 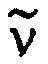 = 1671 w, 1555 w, 1524 w, 1461 m, 1082 m, 985 cm⁻¹.
EI-MS: m/z = 317.3 (M⁺-Cl, 11.6%), 216.3 (NPⁿBu₃, 100%).

### Beispiel 5:

### Synthese von (2,4,6-Cl₃Ph)-N=VCl₂(N=PtBu₃)

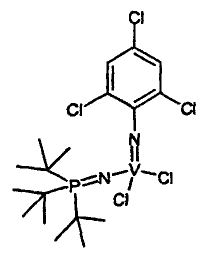

Zu einer Lösung von 1.00 g (2.84 mmol) (2,4,6-Cl₃Ph)-N=VCl₃ in 100 ml Toluol wird bei -50°C unter Rühren 0,82g (2.84 mmol) N-Trimethylsilyl-tri(*t*.-butyl)-iminophosphoran (Synthese nach H. Schmidbauer, G. Blaschke, Z. Naturforsch. 33b, (1978) 1556) in 50 ml Toluol langsam zugetropft (Tropfgeschwindigkeit: etwa 15 min). Die Reaktionslösung verfärbt sich von hellrot nach grün. Nach 4 h wird das Reaktionsgemisch auf Raumtemperatur erwärmt und die inzwischen blaugrüne Lösung 2 h nachgerührt. Nach Entfernen des Lösungsmittels wird das blaue ölige Rohprodukt in 4 mL Hexan aufgenommen und 48 h bei -80°C aufbewahrt. Der ausgefallene, tiefblaue Feststoff wird abfiltriert und im Hochvakuum getrocknet.
- Ausbeute:: 1.32 g (86 %), mikrokristalliner blau-violetter Feststoff

| C₁₈H₂₉Cl₅N₂PV (532.62) | | | |
|---|---|---|---|
| ber. | C 40.59 | H 5.49 | N 5.26 |
| gef. | C 40.18 | H 5.81 | N 5.50 |

¹H-NMR (300 MHz, CDCl₃): δ = 1.53 (d, ³J_{HP} = 14.4 Hz, C-CH₃), 7.159 (s, 2 H, Ar-Hₘₑₜₐ) ppm.
¹³C-NMR (75 MHz, CDCl₃): δ = 29.5 (C-CH₃), 43.0 (d, C-CH₃), 127.3 (Ar)
IR (Nujol): 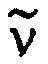 = 1734 w, 1575 w, 1523 w, 1261 m, 1111 s, 1084 s, 1020 s, 974 m, 937 m, 873 w, 862 w, 817 w, 800 cm⁻¹

### Beispiel 6:

### Synthese von (2,6-iPr₂Ph)-N=VCl₂(N=PtBu₃)

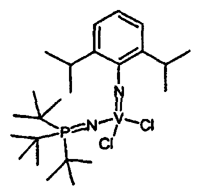

(2,6-iPr₂Ph)-N=VCl₃ wird gemäß Literaturvorschrift (D.D. Devore et al. J. Am. Chem. Soc. Vol. 109 (1987), 748-16) hergestellt.

435 mg (1.50 mmol) N-Trimethylsilyl-tri(*tert*.-butyl)-iminophosphoran (Synthese nach H. Schmidbauer, G. Blaschke, Z. Naturforsch. 33b, (1978) 1556) werden in 10 mL Toluol gelöst, auf 0°C gekühlt und mit einer Lösung von 500 mg (1.50 mmol) [V(Ndip)Cl₃] in 10 mL Toluol versetzt. Die Reaktionslösung färbt sich innerhalb 5 min rotbraun. Nach 10 min wird das Reaktionsgemisch auf Raumtemperatur erwärmt, weitere 5 min gerührt, über ausgeheiztes Celite filtriert und das Filtrat stark eingeengt. Das wachsartige Rohprodukt wird in 5 mL Pentan aufgenommen und 24 h bei -80°C aufbewahrt. Der ausgefallene Feststoff wird abfiltriert und im Hochvakuum getrocknet.
- Ausbeute:: 722 mg (85 %), roter amorpher Feststoff

| C₂₄H₄₄Cl₂N₂PV (513.45) C₂₄H₄₄Cl₂N₂PV × C₇H₈ (605.59) | | | |
|---|---|---|---|
| ber. | C 61.48 | H 8.65 | N 4.63 |
| gef. | C 61.28 | H 8.54 | N 4.89 |

¹H-NMR (200 MHz, C₆D₆): δ = 1.15 (s (br), insg. 39 H, CH(CH₃)₂ sowie C(CH₃)₃), 4.32 (sep, 2 H, ³J_{HH} = 6.7 Hz, CH(CH₃)₂), 7.10-7.16 (m, 3 H, Hₐᵣ) ppm.
¹³C-NMR (50 MHz, C₆D₆): δ = 23.9 (CH(CH₃)₂), 29.4 (CH(CH₃)₂), 30.2 (PC(CH₃)₃), 41.3 (PC(CH₃)₃), 122.5 (Ar-Cₘₑₜₐ), 128.9 (Ar-Cₚₐᵣₐ), 134.7 (Ar-Cₒᵣₜₕₒ) ppm.
³¹P-NMR (81 MHz, C₆D₆): δ = 36.1 ppm.
⁵¹V-NMR (131 MHz, C₆D₆): δ = -363.8 ppm.
IR (Nujol): 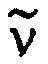 = 1709 m, 1655 m, 1619 s, 1573 s, 1486 m, 1332 w, 1265 vs, 1179 w, 1151 w, 1076 m, 1026 w, 992 m, 970 w, 942 m, 896 w, 875 w, 845 w, 811 s, 739 vs, 704 s, 629 w cm⁻¹.
EI-MS: m/z = 513 (M⁺, 8 %), 297 (C₁₂H₁₇NVCl₂⁺, 26 %), 77 (C₆H₅⁺, 100 %).

### Beispiel 7 (Vergleichsbeispiel):

### Synthese von VOCl₂(N=PtBu₃)

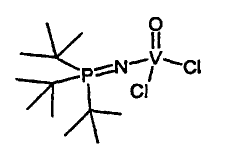

Die Synthese von VOCl₂(N=PtBu₃) erfolgte wie in WO 00/00525 (Beispiel A.6, Seite 18 Zeile 22-32) beschrieben.

### Beispiel 8:

### Darstellung von (2,4,6-Cl₃Ph)-N=VCl₂(N=PPh₃)

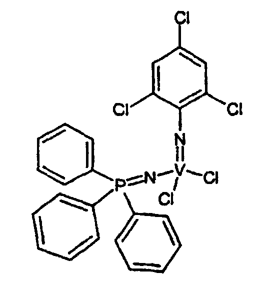

Zu einer Lösung von 1.00 g (2.84 mmol) (2,4,6-Cl₃Ph)-N=VCl₃ in 100 ml Toluol werden bei -50°C unter Rühren eine Lösung von 0,99g (2.84 mmol) N-Trimethylsilyl-triphenyl-iminophosphoran (Synthese nach L. Birkhofer, S.M. Kim, Chem. Ber. 97 (1964), 2100; H. Schmidbaur, W. Wolfsberger, Chem. Ber. 100 (1967), 1000; W. Buchner, W. Wolfsberger, Z. Naturforsch. 29b(1974), 328) in 50 ml Toluol zugegeben. Das Reaktionsgemisch färbt sich zunächst tiefgrün. Nach 30 min wird auf Raumtemperatur erwärmt und die nun braunrote Lösung unter Abdunkelung 60 min nachgerührt. Nach Einengen des Lösungsmittels auf ca. 40 ml wird mit 40 mL Hexan überschichtet und 48 h bei -80°C aufbewahrt. Der ausgefallene, dunkelbraune Feststoff wird abfiltriert und im Hochvakuum getrocknet.
- Ausbeute:: 1.14 g (68% %), amorpher, dunkelbrauner Feststoff

| C₂₄H₁₇Cl₅N₂PV (592.59) | | | |
|---|---|---|---|
| ber. | C 48.64 | H 2.89 | N 4.73 |
| gef. | C 46.22 | H 2.77 | N 4.54 |

¹H-NMR (200 MHz, C₆D₆): δ = 6.90-6.98 (m, 3 H, PhH_{meta, para}), 7.159 (s, 2 H, Ar-Hₘₑₜₐ) 7.77-7.87 (m, 2 H, Ph-Hₒᵣₜₕₒ) ppm.
¹³C-NMR (50 MHz, C₆D₆): 127.9 (Arylimido), 128.8 (Ph-C^{3,5}), 131.5 (Ph-C⁴), 133.2 (ph-C^{2,6}), 136.4 (d,¹J_{PC} = 98.9 Hz, Ph-C¹) ppm.
IR (Nujol): 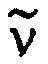 = 1761 w, 1635 w, 1471 w, 1212 m, 1135 s, 1109 s, 1068 s, 954 m, 902 m, 881 w, 834 w, 811 w, 803 cm⁻¹
EI-MS: m/z = 277.8 (39%) 246.1 (64%).

### Beispiel 9:

### Darstellung von (2, 6-iPr₂Ph)-N=VCl₂(N=PPh3)

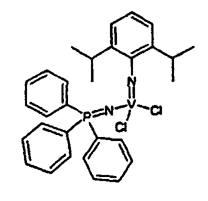

(2,6-iPr₂Ph)-N=VCl₃ wird gemäß Literaturvorschrift (D.D. Devore et al. J. Am. Chem. Soc. Vol. 109 (1987), 748-16) hergestellt.

Zu einer Lösung von 0.94 g (2.84 mmol) (2,6-iPr₂Ph)-N=VCl₃ in 100 ml Toluol wird bei -50°C unter Rühren eine Lösung von 0,99 g (2.84 mmol) N-Trimethylsilyltriphenyl-iminophosphoran (Synthese nach L. Birkhofer, S.M. Kim, Chem. Ber. 97 (1964), 2100; H. Schmidbaur, W. Wolfsberger, Chem. Ber. 100 (1967), 1000; W. Buchner, W. Wolfsberger, Z. Naturforsch. 29b(1974), 328) in 50 ml Toluol zugegeben. Das Reaktionsgemisch färbt sich zunächst tiefgrün. Nach 10 min wird auf Raumtemperatur erwärmt und die tiefrote Lösung unter Abdunkelung 2 h nachgerührt. Nach Einengen des Lösungsmittels auf ca. 20 ml wird mit 20 mL Hexan überschichtet und 48 h bei -80°C aufbewahrt. Der ausgefallene, dunkelgrüne Feststoff wird abfiltriert und im Hochvakuum getrocknet.
- Ausbeute:: 1.27 g (78% ), amorpher, dunkelgrüner Feststoff

| C₃₀H₃₂Cl₂N₂PV (573.42) | | | |
|---|---|---|---|
| ber. | C 62.84 | H 5.62 | N 4.89 |
| gef. | C 64.42 | H 5.44 | N 4.11 |

IR (Nujol): 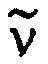 = 1757 w, 1628 w, 1463 w, 1202 m, 1138 s, 1111 s, 1057s, 957 w, 912 m, 883 w, 812 w cm⁻¹.
EI-MS: m/z = 277.8 (36%) 225.1 (24%).

### Beispiel 10(Vergleichsbeispiel):

### Darstellung von VOCl₂(N=PPh₃)

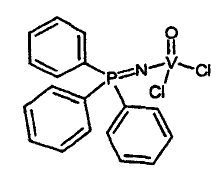

Die Synthese von VOCl₂(N=PPh₃) erfolgte wie von R. Choukroun et al. in Trans. Met. Chem. 4 (1979), 249-251 beschrieben.

### Beispiel 11:

### Ethen/Propen Copolymerisation

Die mit einem Thermostaten auf 40 °C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 3,7 bar gesättigt. Nach Verschließen der Propenzufuhr wird der Gesamtdruck mit nachgereinigtem Ethen auf 5,5 bar eingestellt. Die Reaktion findet bei 40°C statt und wird durch Injektion des Reaktivators mit der Druckspritze gestartet.

Es wird unter konstantem Ethendruck bei 5,5 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 1:**

| Ergebnisse der Ethen/Propen Copolymerisation durch Vanadium-Imido-Phosphoraniminato-Katalysatoren. | |
|---|---|
| Katalysator | Ausbeute [g] |
| VOCl₂(N=PⁿBu₃) | 5.90 |
| (2,6-iPr₂Ph)-N=VCl₂(N=PⁿBu₃) | 9.33 |
| (2,4,6-Cl₃Ph)-N=VCl₂(N=PⁿBu₃) | 11.17 |
| VOCl₂(N=P^{t}Bu₃) | 5.96 |
| (2,6-iPr₂Ph)-N=VCl₂(N=P^{t}Bu₃) | 9.56 |
| (2,4,6-Cl₃Ph)-N=VCl₂(N=P^{t}Bu₃) | 11.66 |
| VOCl₂(N=PPh₃) | 3.17 |
| (2,4,6-Cl₃Ph)-N=VCl₂(N=PPh₃) | 7.88 |

Deutlich ist aus Tabelle 1 zu erkennen, dass die neuen Imido-Phosphoraniminato-Komplexe des Vanadium höhere Ausbeuten an Polymer liefern als die analogen Vanadyl-Phosphoraniminato-Komplexe.

### Beispiel 12:

### EPDM-Synthese

Ein inertisierter Autoklav wird mit 1500 ml Hexan und 6.0g Ethylidennorbornen gefüllt und auf die Polymerisationstemperatur von 40°C aufgeheizt. Dann werden Ethen und Propen im Verhältnis 1 : 19 bis zu einem Druck von 7 bar aufgepresst. Die Katalysatorkomponenten (0.05 mmol V-Komponente, 1 mmol Ethylaluminiumsequichlorid und 0.25 mmol Dichlorphenylessigsäureethylester) werden über Druckbüretten zeitgleich in den Reaktor gegeben und dann wird bei einem Druck von 7.0 bar polymerisiert. Die Regelung erfolgt durch Dosierung von Ethen. Nach einer halben Stunde wird der Versuch beendet und der Ansatz in einen mit Ethanol gefüllten Behälter überführt. Das Polymer wird bei 80°C im Vakuumtrockenschrank getrocknet.

**Tabelle 2:**

| Ergebnisse der Ethen/Propen/Ethylidennorbornen Terpolymerisation durch Vanadium-Katalysatoren. | | | | | |
|---|---|---|---|---|---|
| Katalysator | Ausbeute [g] | E [wt%] | P [wt%] | ENB [wt%] | Tg [°C] |
| O=VCl₃ | 25.9 | 46.0 | 44.2 | 9.8 | -46 |
| (2,4,6-Cl₃Ph)-N=VCl₃ | 31.3 | 48.3 | 42.0 | 9.7 | -46 |
| (2,4,6-Cl₃Ph)-N=VCl₂(NPPh₃) | 38.4 | 50.9 | 39.8 | 9.3 | -48 |

Die Ergebnisse zeigen klar, dass die neuartigen Imido-Phosphoraniminato-Komplexe nicht nur deutlich aktiver sind als VOCl₃ und die entsprechenden Imido-Komplexe, sondern unter gleichen Bedingungen auch Terpolymere mit veränderter Zusammensetzung und niedrigeren Glasübergangstemperaturen produzieren.

## Patentansprüche

1. Vanadium-Imido-Phosphoraniminato-Verbindungen.

2. Verbindungen gemäss Anspruch 1, welche der allgemeinen Formel
R-N=VCl₂(NPR1R2R3) (I)
oder
R-N=VXY(NPR1R2R3) (II),
entsprechen,
wobei R für eine C₁-C₁₀ Alkylgruppe, C₆-C₁₄ Arylgruppe oder C₁-C₁₀ Heteroarylgruppe steht,
wobei X,Y unabhängig voneinander verschiedene oder gleichartige monoanionische Liganden sind, die miteinander und/oder mit der R-Gruppe des Imids, bzw. dessen Substituenten und/oder mit den Resten R¹, R², R³ des Iminophosphorans verbunden sein können oder wobei X und/oder Y ebenfalls ein Iminophosphoran mit frei wählbaren Resten R⁴, R⁵, R⁶ und R⁷, R⁸, R⁹ ist,
wobei R¹, R², R³ und gegebenenfalls R⁴, R⁵, R⁶, R⁷, R⁸, R⁹ unabhängig voneinander verschiedene oder gleichartige C₁-C₁₀ Alkyl-, C₆-C₁₄ Aryl-, C₁-C₁₀-Alkoxygruppen sind, die miteinander und/oder mit der R-Gruppe des Imids, bzw. dessen Substituenten und/oder mit den Resten R¹, R², R³ des Iminophosphoran verbunden sein können oder aber eine oder mehrere Substituenten des Phosphors über Heteroatome Het wie zum Beispiel N, O, S an das Phosphor gebunden sind.

3. Verbindungen gemäss Anspruch 1 oder 2, **dadurch gekennzeichnet, dass** sie einer der folgenden Strukturen entsprechen

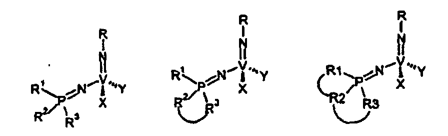

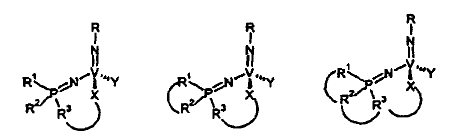

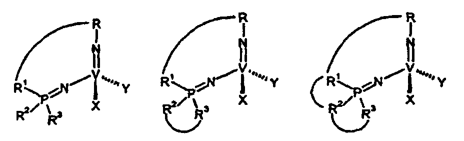

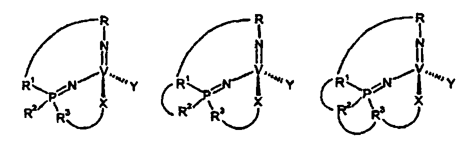

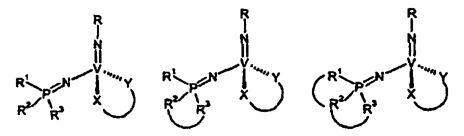

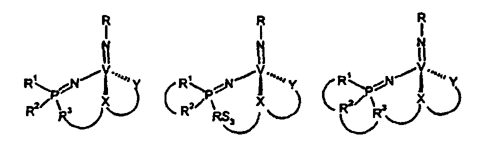

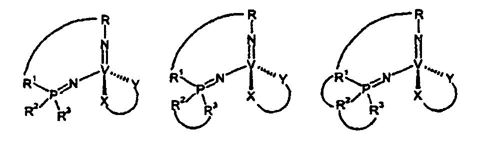

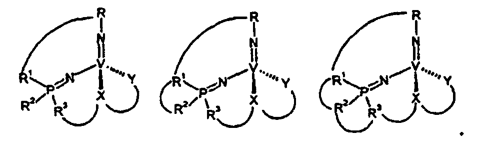

4. Zusammensetzungen enthaltend Vanadium-Imido-Phosphoraniminato-Verbindungen und eine organo-metallische Verbindung der Gruppen 1, 2, 12 oder 13 des Periodensystems der Elemente gemäss IUPAC 1985, wobei in besagter organo-metallischer Verbindung mindestens eine Kohlenwasserstoffgruppe hierbei direkt über ein Kohlenstoffatom an das Metallatom gebunden ist.

5. Zusammensetzungen gemäss Anspruch 4, **dadurch gekennzeichnet, dass** sie als Vanadium-Imido-Phosphoraniminato-Verbindungen eine Verbindung gemäss einem der Ansprüche 1 bis 4 und als organo-metallische Verbindung eine Verbindung des Aluminiums, Natriums, Lithiums, Zinks oder Magnesiums enthalten.

6. Verwendung einer Zusammensetzung gemäss Anspruch 4 oder 5 als Katalysator.

7. Katalysator für die Polymerisation von Olefinen, enthaltend eine Zusammensetzung gemäss Anspruch 5 oder 6 oder eine Verbindung gemäss Anspruch 1.

8. Katalysator gemäss Anspruch 7, **dadurch gekennzeichnet, dass** zusätzlich eine Verbindung aus der Gruppe halogenhaltige Verbindungen, halogenhaltige Kohlenwasserstoffe, Lewis Säuren oder Lewis Basen und Gemische aus zwei oder mehreren dieser Stoffe enthalten ist.

9. Verfahren zur Homo- oder Co-Polymerisation von Olefinen gegebenenfalls mit einem oder mehreren Dienen, **dadurch gekennzeichnet, dass** in Gegenwart eines Katalysators gemäss Anspruch 7 oder 8 polymerisiert wird.

10. Verfahren zur Homo- oder Co-Polymerisation von Olefinen gegebenenfalls mit einem oder mehreren Dienen, **dadurch gekennzeichnet, dass** in Gegenwart einer Verbindung gemäss Anspruch 1 oder einer Zusammensetzung gemäss Anspruch 5 polymerisiert wird.

## Claims

1. Vanadium-imido-phosphoraniminato compounds.

2. Compounds according to Claim 1 which correspond to the general formula
R-N=VCl₂(NPR1R2R3) (I)
or
R-N=VXY(NPR1R2R3) (II),
where R is a C₁-C₁₀-alkyl group, C₆-C₁₄-aryl group or C₁-C₁₀-heteroaryl group,
X,Y are, independently of one another, different or identical monoanionic ligands which may be joined to one another and/or to the R group of the imide or its substituents and/or to the radicals R¹, R², R³ of the iminophosphorane, or X and/or Y are/is likewise an iminophosphorane with freely selectable radicals R⁴, R⁵, R⁶ and R⁷, R⁸, R⁹,
R¹, R², R³ and, if present, R⁴, R⁵, R⁶, R⁷, R⁸, R⁹ are, independently of one another, different or identical C₁-C₁₀-alkyl, C₆-C₁₄-aryl, C₁-C₁₀-alkoxy groups which may be joined to one another and/or to the R group of the imide or its substituents and/or to the radicals R¹, R², R³ of the iminophosphorane, or else one or more substituents of the phosphorus are bound via heteroatoms Het, for example N, O, S, to the phosphorus.

3. Compounds according to Claim 1 or 2, **characterized in that** they correspond to one of the following structures

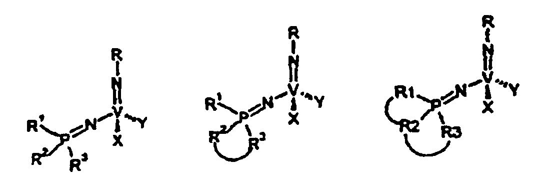

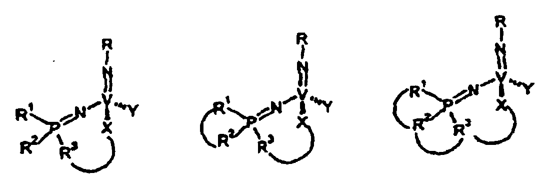

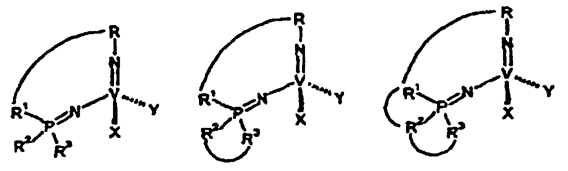

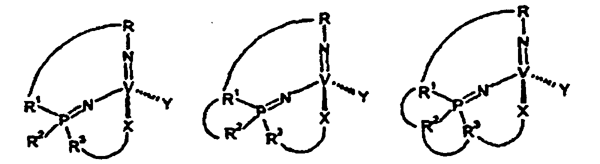

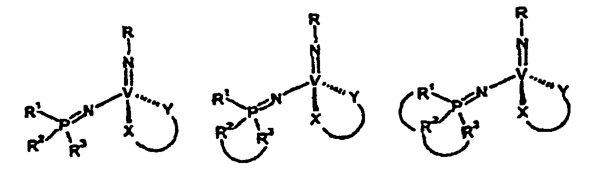

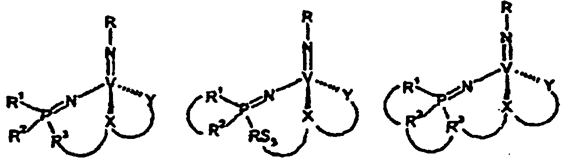

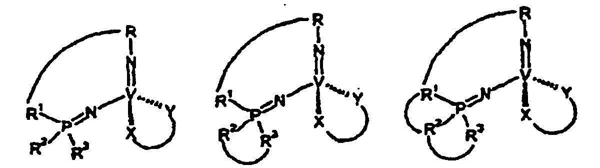

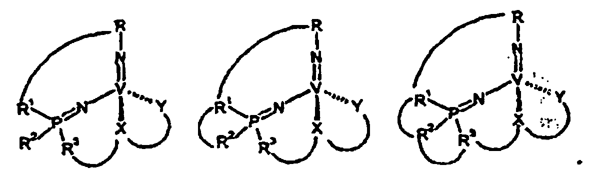

4. Compositions comprising vanadium-imido-phosphoraniminato compounds and an organometallic compound of group 1, 2, 12 or 13 of the Periodic Table of the Elements in the IUPAC 1985 version, where at least one hydrocarbon group is bound directly via a carbon atom to the metal atom in the said organometallic compound.

5. Composition according to Claim 4, **characterized in that** a compound according to any of Claims 1 to 4 is present as vanadium-imido-phosphoraniminato compound and a compound of aluminium, sodium, lithium, zinc or magnesium is present as organometallic compound.

6. Use of a composition according to Claim 4 or 5 as catalyst.

7. Catalyst for the polymerization of olefins comprising a composition according to Claim 5 or 6 or a compound according to Claim 1.

8. Catalyst according to Claim 7, **characterized in that** a compound from the group consisting of halogen-containing compounds, halogen-containing hydrocarbons, Lewis acids or Lewis bases and mixtures of two or more of these substances is additionally present.

9. Process for the homopolymerization or copolymerization of olefins, if desired together with one or more dienes, **characterized in that** the polymerization is carried out in the presence of a catalyst according to Claim 7 or 8.

10. Process for the homopolymerization or copolymerization of olefins, if desired together with one or more dienes, **characterized in that** the polymerization is carried out in the presence of a compound according to Claim I or a composition according to Claim 5.

## Revendications

1. Dérivés imido-phosphoraniminés du vanadium.

2. Composés selon la revendication 1, répondant à la formule générale
R-N=VCl₂(NPR1R2R3) I)
ou à la formule générale
R-N=VXY(NPR1R2R3) (II),
dans lesquelles R représente un groupe alkyle en C₁-C₁₀, aryle en C₆-C₁₄ ou hétéroaryle en C₁-C₁₀,
X et Y représentent, indépendamment l'un de l'autre, des ligands monoanioniques identiques ou différents, qui peuvent être liés entre eux et/ou avec le groupe R de l'imide ou ses substituants et/ou avec les groupes R¹, R², R³ de l'iminophosphorane ou bien X et/ou Y représentent également un iminophosphorane à trois groupes R⁴, R⁵, R⁶ et R⁷, R⁸, R⁹ qui peuvent être choisis librement,
R¹, R², R³ et le cas échéant R⁴, R⁵, R⁶, R⁷, R⁸, R⁹ représentent, indépendamment les uns des autres, des groupes alkyle en C₁-C₁₀, aryle en C₆-C₁₄, alcoxy en C₁-C₁₀ identiques ou différents, qui peuvent être liés entre eux et/ou avec le groupe R de l'imide ou ses substituants et/ou avec les groupes R¹, R², R³ de l'iminophosphorane, ou bien encore un ou plusieurs substituants du phosphore sont reliés à celui-ci par l'intermédiaire d'hétéroatomes Het tels que N, O, S.

3. Composés selon la revendication 1 ou 2, **caractérisés en ce qu'**ils possèdent l'une des structures suivantes :

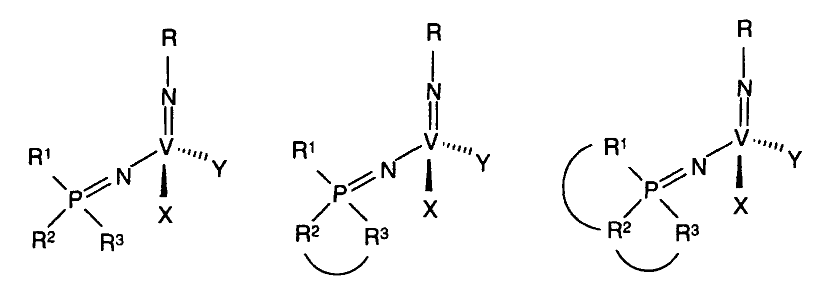

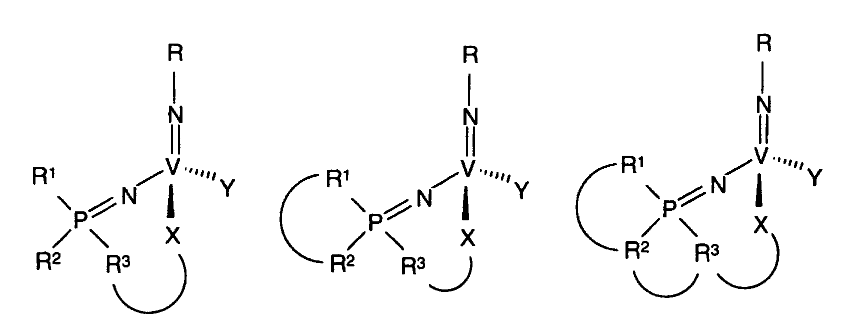

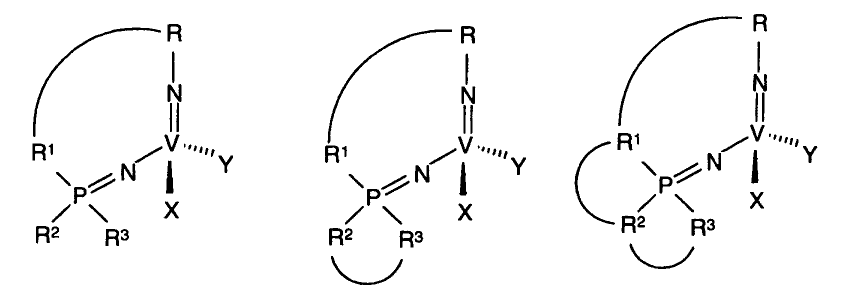

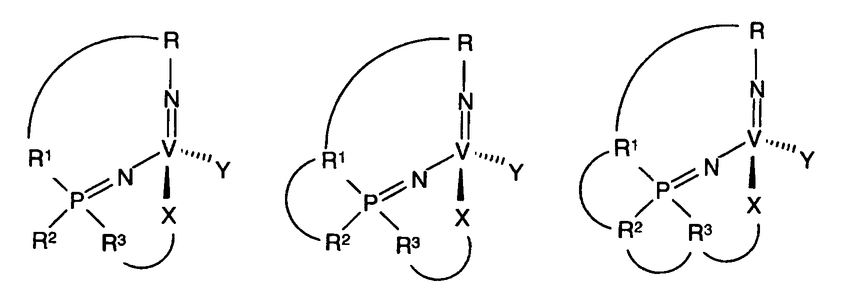

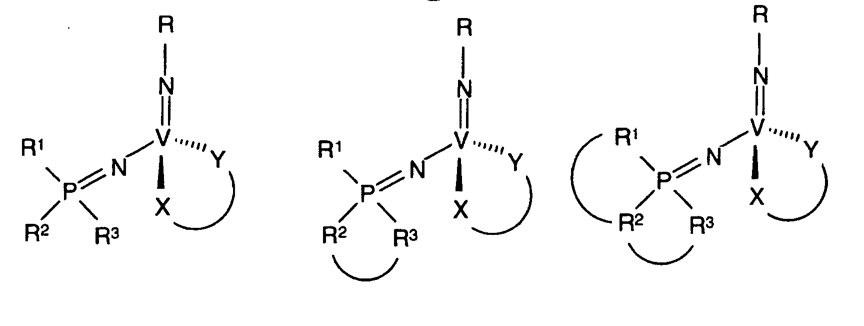

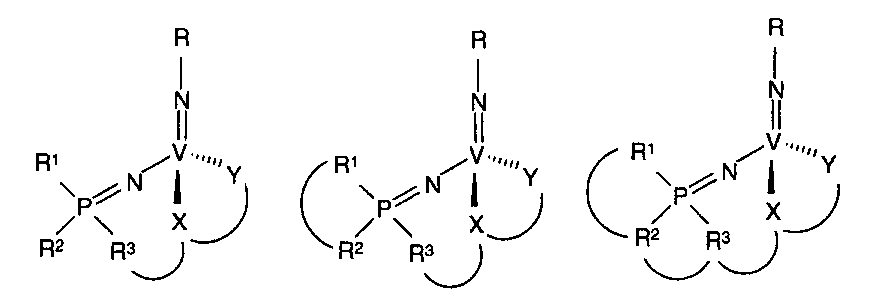

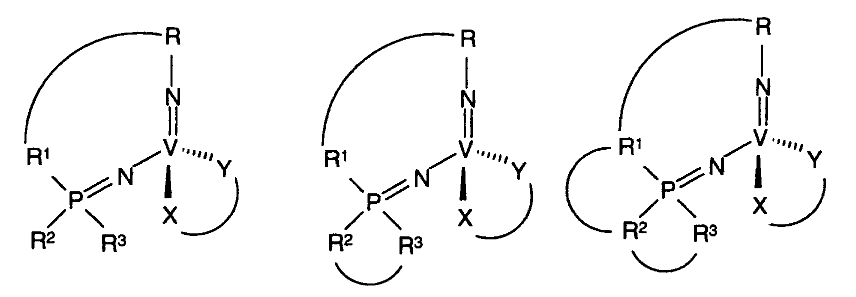

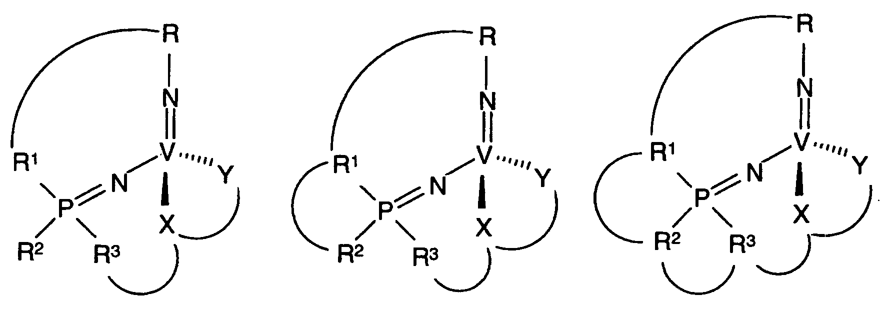

4. Compositions contenant des dérivés imido-phosphoraniminés du vanadium et un composé organométallique des groupes 1, 2, 12 ou 13 de la classification périodique des éléments selon l'IUPAC 1985, au moins un groupe hydrocarboné de ce composé organométallique étant relié directement à l'atome de métal par l'intermédiaire d'un atome de carbone.

5. Compositions selon la revendication 4, **caractérisées en ce qu'**elles contiennent en tant que dérivé phosphoraniminé du vanadium un composé selon l'une des revendications 1 à 4 et en tant que composé organométallique un composé de l'aluminium, du sodium, du lithium, du zinc ou du magnésium.

6. Utilisation d'une composition selon la revendication 4 ou 5 en tant que catalyseur.

7. Catalyseur pour la polymérisation d'oléfines, contenant une composition selon la revendication 5 ou 6 ou un composé selon revendication 1.

8. Catalyseur selon la revendication 7, **caractérisé en ce qu'**il contient en outre un composé du groupe des composés halogénés, des hydrocarbures halogénés, des acides de Lewis ou des bases de Lewis ou un mélange de deux ou plusieurs de ces substances.

9. Procédé pour l'homo- ou la co-polymérisation d'oléfines, le cas échéant avec un ou plusieurs diènes, **caractérisé en ce que** l'on polymérise en présence d'un catalyseur selon la revendication 7 ou 8.

10. Procédé pour l'homo- ou la co-polymérisation d'oléfines, le cas échéant avec un ou plusieurs diènes, **caractérisé en ce que** l'on polymérise en présence d'un composé selon la revendication 1 ou d'une composition selon la revendication 5.
